# FASCICULE DE BREVET EUROPEEN

(11) **EP 0 713 604 B1**
(45) Date de publication et mention de la délivrance du brevet: **26.03.1997**
(21) Numéro de dépôt: 94916289.5
(22) Date de dépôt: 16.05.1994
(51) Int. Cl.: H01F 7/16

(54) **ACTIONNEUR ELECTROMAGNETIQUE MONOPHASE A FAIBLE COURSE PRESENTANT UN BON RAPPORT FORCE SUR PUISSANCE ELECTRIQUE**
EINPHASIGER ELEKTROMAGNETISCHES BETÄTIGUNGSELEMENT MIT KLEINER ARBEITSBEWEGUNG UND GUTEM VERHÄLTNIS KRAFT/ELEKTRISCHE LEISTUNG
MONOPHASE, SHORT TRAVEL, ELECTROMAGNETIC ACTUATOR HAVING A GOOD ELECTRIC POWER/FORCE RATIO

(30) Priorité: 19.05.1993 FR 9306073
(43) Date de publication de la demande: 29.05.1996
(73) Titulaire: MOVING MAGNET TECHNOLOGIES S.A., 25000 Besançon (FR)
(72) Inventeur: OUDET, Claude, F-25000 Besançon (FR); GANDEL, Pierre, F-25500 Montfocon (FR)
(74) Mandataire: Pernez, Helga
(86) Numéro de dépôt international: FR9400579
(87) Numéro de publication internationale: WO9427303

(56) Documents cités:
- EP-A- 0 015 783
- EP-A- 0 157 632
- DE-A- 3 008 534
- GB-A- 2 039 150
- US-A- 4 751 487
- US-A- 4 779 582
- PATENT ABSTRACTS OF JAPAN vol. 8, no. 84 (E-239) (1521) 18 Avril 1984 & JP,A,59 006 503 (SUMITOMO TOKUSHIYU KINZOKU K.K.) 13 Janvier 1984
- PATENT ABSTRACTS OF JAPAN vol. 8, no. 84 (E-239) (1521) 18 Avril 1984 & JP-A-59 006 503

## Description

La présente invention concerne un actionneur électromagnétique monophasé, destiné plus particulièrement à des applications nécessitant des courses de faible amplitude.

On connaît dans l'état de la technique des actionneurs comportant une première partie mobile selon une direction Y, et une seconde partie statorique fixe réalisée en un matériau de très haute perméabilité magnétique et comportant au moins une bobine. De tels actionneurs sont par exemple divulgués dans le brevet français n° 2648633 de la demanderesse. L'actionneur selon cet exemple de réalisation comporte un aimant mince aimanté transversalement et présente la particularité de fournir une force constante sur toute la course et une absence de force magnétostatique.

On connaît également dans l'art antérieur des actionneurs décrits par exemple dans les brevets EP 157 632 ou US 4779582. Ces actionneurs comportent deux bobines électriques agissant de manière antagoniste sur un organe mobile comportant un aimant permanent à paroi épaisse.

De tels dispositifs de l'art antérieur présentent les inconvénients d'une loi de force non-linéaire par rapport au courant injecté dans les bobinages, d'un encombrement radial élevé et d'un rendement force par watt faible.

L'objet de la présente invention est un actionneur optimisé pour des faibles courses, et de proposer un actionneur qui présente une force par watt élevée.

A cet effet, l'actionneur selon l'invention présente une partie statorique fixe et une partie ferromagnétique mobile définissant entre elles deux entrefers disposés symétriquement par rapport au plan médian perpendiculaire à l'axe de déplacement Y de l'organe mobile aimanté radialement et passant par le milieu d'un aimant permanent, la longueur de la partie ferromagnétique mobile étant sensiblement égale à la longueur de l'aimant permanent. L'entrefer radial entre l'aimant fixe et la partie ferromagnétique est rendu aussi faible que mécaniquement possible.

Quand la partie ferromagnétique mobile est en position médiane par rapport à l'aimant et à la partie statorique fixe, le flux magnétique dû à l'aimant se partage de façon égale entre les deux entrefers en l'absence de courant dans la bobine d'excitation.

Lorsqu'un courant circule dans la bobine d'excitation, il engendre un flux s'ajoutant ou se retranchant à celui de l'aimant permanent. Suivant le sens du flux généré par la bobine, celui-ci se fermera préférentiellement dans l'un ou dans l'autre des entrefers, ce qui provoque le déplacement de la partie ferromagnétique mobile en direction de l'entrefer traversé par l'addition des deux flux.

Ce type d'actionneur présente la particularité de produire une grande force magnétostatique dans chacune des deux positions stables sans courant en bout de course. Afin de diminuer la proportion de force magnétostatique par rapport à la force due au courant, on peut avantageusement incliner les entrefers par rapport à l'axe Y, d'un angle de l'ordre de 45°.

Selon une variante préférée, la partie statorique fixe est constituée par un tube cylindrique extérieur réalisé en un matériau magnétique doux, fermé à chacune de ses extrémités par une flasque de même matériau présentant une surface conique. Avantageusement, la bobine est logée dans le cylindre extérieur, l'aimant fixe se logeant dans le diamètre intérieur de la bobine, et étant préférentiellement réalisée dans un aimant à haute énergie et à orientation radiale tels que ceux proposés par la société DAIDO STEEL Ltd. La partie magnétique mobile est constituée par une pièce tubulaire réalisée en un matériau magnétique doux présentant à chacune de ses extrémités une surface conique complémentaire de celle de la partie statorique fixe.

Avantageusement la bobine est logée dans une cavité cylindrique prévue dans la partie statorique fixe.

Selon une variante, l'actionneur comporte deux bobines annulaires disposées symétriquement par rapport au plan transversal médian, logées dans des cavités cylindriques prévues dans la partie statorique fixe. Ce mode de réalisation permet l'utilisation de l'actionneur en commande unipolaire de façon bidirectionnelle et permet d'intercaler un matériau magnétique doux entre les deux bobines pour faciliter la fermeture du flux magnétique entre l'aimant et le cylindre extérieur, plutôt qu'à travers l'épaisseur du cuivre de la bobine.

Selon un mode de réalisation préféré, l'actionneur comporte deux ressorts exerçant sur chacune des extrémités de l'organe mobile une force de rappel orientée selon l'axe Y et destinée à compenser l'effort magnétostatique naturel de cette structure. On arrive grâce à cette méthode à développer une force sensiblement constante sur toute la course de l'actionneur.

Selon une variante particulière, l'actionneur comporte une deuxième partie ferromagnétique mobile coaxiale avec la première partie ferromagnétique mobile. Ce mode de réalisation permet de disposer de deux organes mobiles en sens opposés.

De préférence, l'aimant est fixe, et selon une variante particulière, l'aimant cylindrique à orientation radiale est remplacé par 3 tuiles formant des secteurs d'environ 120°, ou par une succession d'aimants minces rectangulaires répartis de façon régulière sur un diamètre.

L'invention sera mieux comprise à la lecture de la description qui suit, faisant référence aux dessins annexés où :
- la figure 1 représente une vue en coupe, à une échelle 2, d'un actionneur selon l'invention,
- la figure 2 représente une vue en coupe longitudinale d'une variante de réalisation ;
- la figure 3 représente une vue selon un plan de coupe transversale AA de cette variante ;
- la figure 4 représente une vue d'un actionneur selon une deuxième variante ;
- la figure 5 représente une vue d'un actionneur selon une troisième variante ;
- la figure 6 représente une vue d'un actionneur selon une quatrième variante.

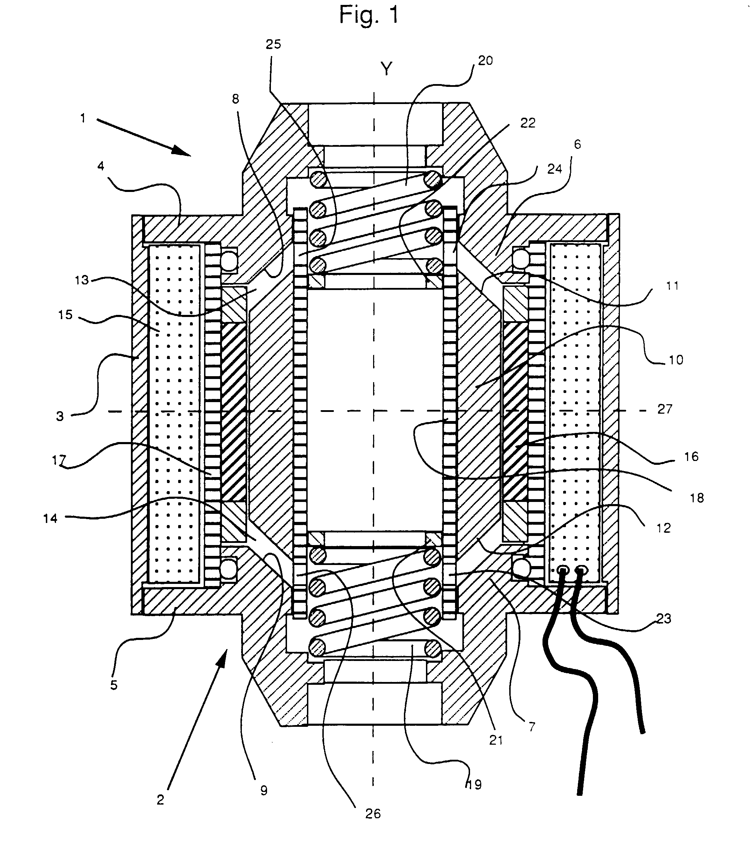

L'actionneur représenté à titre d'exemple non limitatif en figure 1 comporte une partie statorique fixe constituée par deux pièces cylindriques (1, 2) réunies par une pièce de fermeture tubulaire (3), les trois pièces coaxiales étant réalisées en un matériau magnétique doux.

Les pièces cylindriques (1, 2) présentent une partie frontale respectivement (4, 5) de forme annulaire et une partie intérieure respectivement (6, 7) présentant une surface (8, 9) conique. La longueur de la pièce de fermeture (3) est de 37 millimètres, dans l'exemple de réalisation décrit, et le diamètre extérieur de la partie statorique fixe est de 45 millimètres.

La partie ferromagnétique mobile (10) est constituée par une pièce tubulaire en un matériau magnétique doux présentant à ses deux extrémités frontales (11, 12) des surfaces coniques définissant avec les surfaces coniques (8, 9) de la partie statorique fixe deux entrefers annulaires (13, 14). La largeur de l'entrefer, mesurée suivant la direction Y de déplacement de la partie ferromagnétique mobile, est de 1 millimètre.

L'actionneur comporte une bobine annulaire (15) constituée par un enroulement de fils de cuivre. Cette bobine (15) est logée dans une cavité cylindrique de la partie statorique fixe, et engendre, lorsqu'un courant circule dans ladite bobine, un flux magnétique conduit par la pièce de fermeture (3), le premier entrefer (13), la pièce statorique mobile (10), et le second entrefer (14).

L'aimant permanent (16) est constitué par une pièce tubulaire aimantée radialement. Il est collé sur une pièce d'isolation (17) assurant l'étanchéité de la cavité dans laquelle est logée la bobine électrique (15), Cette pièce d'isolation est réalisée en matière plastique.

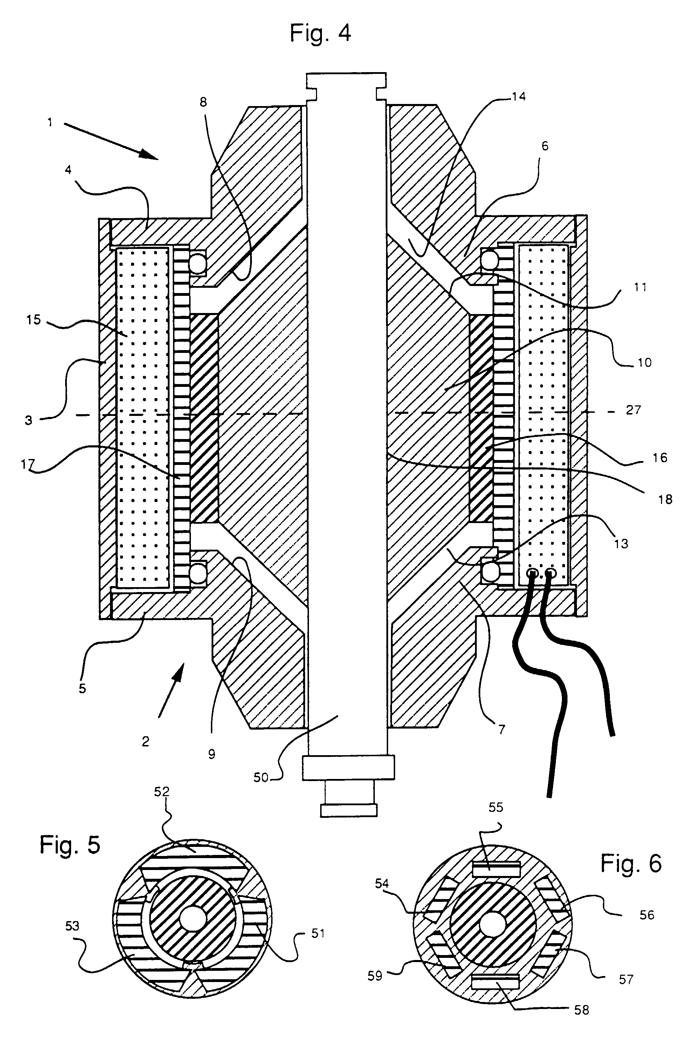

La partie ferromagnétique mobile (10) est solidaire d'un organe mobile (18) de forme tubulaire pour l'accouplement avec un moyen extérieur, par exemple le pointeau d'une vanne, ou, dans l'exemple de réalisation représenté en figure 4, une lame de contact hyperfréquence.

L'organe mobile (18) est ramené au repos en position médiane par deux ressorts (19, 20) agissant sur des épaulements respectivement (21, 22) prévus à l'intérieur de l'organe mobile (18). L'organe mobile (18) présente des évents (23 à 26) pour éviter la compression de l'air dans les entrefers (13, 14).

A titre d'exemple, un actionneur selon cet exemple de réalisation développe une force de 40 newton pour une puissance électrique de 6 watt, et pour un déplacement de ± 1 millimètre par rapport au plan de symétrie médian (27).

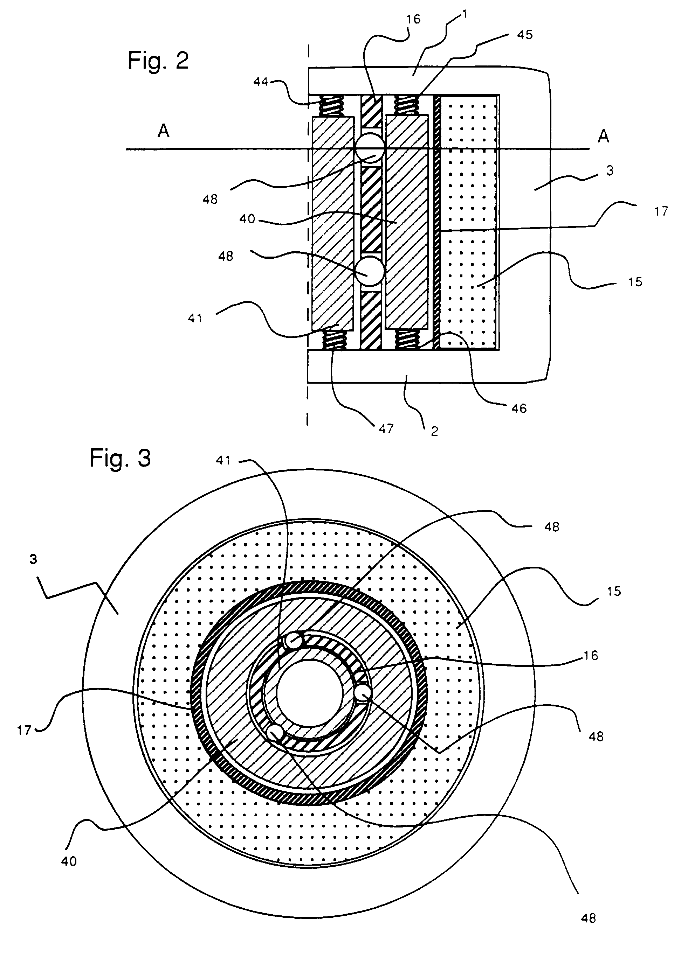

Les figures 2 et 3 représentent des vues en coupe d'une variante de réalisation mettant en oeuvre deux parties statoriques mobiles (40, 41) coaxiales de forme tubulaire, mobiles axialement entre les deux parties frontales (1, 2) de la pièce statorique fixe définissant des entrefers (44 à 47).

Des billes (48) sont positionnées dans des logements prévues dans l'aimant permanent (16) de forme tubulaire. Ces billes (48) assurent le positionnement et le guidage des parties statoriques mobiles (40, 41).

Le passage d'un courant dans la bobine annulaire (15) provoque le déplacement en sens opposés des deux parties statoriques mobiles (40, 41).

La figure 4 représente une variante de l'actionneur présentant les caractéristiques générales de l'actionneur représenté en figure 1, dont l'organe mobile entraîne une tige de couplage cylindrique (50). Dans la réalisation représentée, il n'existe pas de ressorts de rappel, afin d'exploiter l'effort magnétostatique à chaque extrémité de la course, se traduisant par deux position stables en l'absence de courant.

La figure 5 représente une variante de réalisation, dans laquelle l'aimant permanent est constitué par un assemblage de trois aimants minces (51, 52, 53) en forme de tuile formant des secteurs d'environ 120°.

Dans l'exemple de réalisation représenté en figure 6, l'aimant permanent est constitué par six aimants parallélépipédiques (54 à 59) régulièrement espacés.

L'invention est décrite dans ce qui précède à titre d'exemples non limitatifs. Il est bien entendu que l'Homme de Métier sera à même de réaliser diverses variantes sans pour autant sortir du cadre de l'invention.

## Revendications

1. Actionneur électromagnétique monophasé comportant au moins une première partie ferromagnétique (10) solidaire d'un organe mobile selon une direction Y, et une seconde partie statorique fixe (1, 2, 3) réalisée en un matériau magnétique doux et comportant au moins une bobine (15) électrique, ledit actionneur comportant un aimant (16) mince aimanté transversalement, la partie statorique fixe et la partie ferromagnétique mobile (10, 40, 41) définissent entre elles au moins deux entrefers (13, 14) disposés symétriquement par rapport au plan médian perpendiculaire à l'axe de déplacement Y de l'organe mobile (10, 40, 41) et passant par le milieu de l'aimant permanent (16), la longueur de la partie ferromagnétique mobile (10, 40, 41) étant sensiblement égale à la longueur de l'aimant permanent (16) caractérisé en ce que l'aimant permanent (16) est formé d'une pièce tubulaire mince coaxiale à une bobine électrique (15) unique.

2. Actionneur électromagnétique monophasé selon la revendication 1 caractérisé en ce que les entrefers (13, 14) forment avec l'axe Y un angle compris entre 0 et 90 degrés, de préférence de l'ordre de 45 degrés.

3. Actionneur électromagnétique monophasé selon la revendication 1 ou 2 caractérisé en ce que la partie statorique fixe est constituée par deux pièces cylindriques réunies par une pièce de fermeture tubulaire (3) réalisées en un matériau magnétique doux, présentant une partie frontale annulaire prolongée par une partie centrale présentant une surface conique, la partie ferromagnétique mobile (10, 40, 41) étant constituée par une pièce tubulaire réalisée en un matériau magnétique doux, présentant à ses extrémités frontales une surface conique complémentaire de la surface conique des pièces statoriques fixes, l'aimant (16) étant constitué par une pièce tubulaire aimantée radialement.

4. Actionneur électromagnétique monophasé selon la revendication 3 caractérisé en ce que la bobine (15) est logée dans une cavité cylindrique prévue dans la partie statorique fixe.

5. Actionneur électromagnétique monophasé selon la revendication 3 ou 4 caractérisé en ce que la bobine (15) est constituée de deux bobines annulaires disposées symétriquement par rapport au plan transversal médian (27), logées dans des cavités cylindriques prévues dans la partie statorique fixe.

6. Actionneur électromagnétique monophasé selon l'une quelconque des revendications précédentes caractérisé en ce qu'il comporte deux ressorts exerçant sur chacune des extrémités de l'organe mobile (10) une force de rappel orientée selon l'axe Y.

7. Actionneur électromagnétique monophasé selon l'une quelconque des revendications précédentes caractérisé en ce qu'il comporte une deuxième partie ferromagnétique mobile (10, 41) coaxiale avec la première partie ferromagnétique mobile (40) et située entre l'aimant permanent (16) et la pièce d'isolation (17), la bobine électrique (15) provoquant le déplacement en sens opposé des deux parties statroniques mobiles.

8. Actionneur électromagnétique monophasé selon l'une quelconque des revendications précédentes caractérisé en ce que l'aimant (16) est fixe.

9. Actionneur électromagnétique monophasé selon l'une quelconque des revendications 1 à 3 caractérisé en ce que l'aimant (16) est constitué par trois aimants (51 à 53) en forme de tuile formant des secteurs d'environ 120°.

10. Actionneur électromagnétique monophasé selon l'une quelconque des revendications 1 à 3 caractérisé en ce que l'aimant (16) est constitué par une succession de secteurs aimantés également répartis suivant un diamètre.

## Patentansprüche

1. Elektromagnetischer Einphasenschalter mit zumindest einem ersten ferromagnetischen Teil (10), das Bestandteil eines nach einer Richtung Y beweglichen Organs ist, und einem zweiten festen Statorteil (1, 2, 3) aus einem weichen magnetischen Werkstoff und mit zumindest einer elektrischen Spule (15), wobei der genannte Schalter einen dünnen, quermagnetisierten Magneten (16) aufweist, und das feste Statorteil und das bewegliche ferromagnetische Teil (10, 40, 41) zueinander mindestens zwei Luftspalte (13, 14) definieren, die in bezug auf die senkrecht zur Verschiebungsachse Y des beweglichen Organs (10, 40, 41) mittlere Ebene symmetrisch angeordnet sind und durch die Mitte des Dauermagneten (16) verlaufen, wobei die Länge des beweglichen ferromagnetischen Teils (10, 40, 41) im wesentlichen der Länge des Dauermagneten (16) entspricht, dadurch gekennzeichnet, dass der Dauermagnet (16) aus einem dünnen rohrförmigen Teil besteht, das koaxial zu einer einzigen elektrischen Spule (15) angeordnet ist.

2. Elektromagnetischer Einphasenschalter nach dem Anspruch 1, dadurch gekennzeichnet, dass die Luftspalte (13, 14) mit der Achse Y einen Winkel zwischen 0 und 90 Grad bilden, vorzugsweise von ca. 45 Grad.

3. Elektromagnetischer Einphasenschalter nach einem der Ansprüche 1 oder 2, dadurch gekennzeichnet, dass das feste Statorteil aus zwei zylindrischen, von einem rohrförmigen Verschlussteil (3) verbundenen und aus einem weichen magnetischen Werkstoff bestehenden Teilen besteht, und es eine ringförmige Vorderseite aufweist, die von einem mittleren Teil mit einer kegelförmigen Oberfläche verlängert wird, wobei das bewegliche ferromagnetische Teil (10, 40, 41) aus einem rohrförmigen Teil aus einem weichen magnetischen Werkstoff besteht, das an seinen Vorderenden eine kegelförmige Oberfläche aufweist, die die kegelförmige Oberfläche der festen Statorteile ergänzt, wobei der Magnet (16) aus einem radial magnetisierten rohrförmigen Teil besteht.

4. Elektromagnetischer Einphasenschalter nach dem Anspruch 3, dadurch gekennzeichnet, dass die Spule (15) in einer im festen Statorteil vorgesehenen zylinderförmigen Vertiefung angeordnet ist.

5. Elektromagnetischer Einphasenschalter nach einem der Ansprüche 3 oder 4, dadurch gekennzeichnet, dass die Spule (15) aus zwei ringförmigen Spulen besteht, die symmetrisch in bezug auf die mittlere Querebene (27) und in einer zylinderförmigen Vertiefung des festens Statorteils angeordnet sind.

6. Elektromagnetischer Einphasenschalter nach einem der vorstehend genannten Ansprüche, dadurch gekennzeichnet, dass er zwei Federn umfasst, die auf jedes der Enden des beweglichen Organs (10) eine nach der Achse Y ausgerichtete Rückstellkraft ausüben.

7. Elektromagnetischer Einphasenechalter nach einem der vorstehend genannten Ansprüche, dadurch gekennzeichnet, dass er einen zweiten beweglichen ferromagnetischen Teil (10, 41) umfasst, das koaxial zum ersten beweglichen ferromagnetischen Teil (40) und zwischen dem Dauermagneten (16) und dem Isolationsteil (17) angeordnet ist, wobei die elektrische Spule (15) die Verschiebung der beiden beweglichen Statorteile in gegensätzlicher Richtung verursacht.

8. Elektromagnetischer Einphasenschalter nach einem der vorstehend genannten Ansprüche, dadurch gekennzeichnet, dass der Magnet (16) fest ist.

9. Elektromagnetischer Einphasenschalter nach einem der vorstehend genannten Ansprüche 1 bis 3, dadurch gekennzeichnet, dass der Magnet (16) aus drei ziegelförmigen Magneten (51 bis 53) besteht, die Abschnitte von ca. 120° bilden.

10. Elektromagnetischer Einphasenschalter nach einem der vorstehend genannten Ansprüche 1 bis 3, dadurch gekennzeichnet, dass der Magnet (16) aus einer Reihe von magnetisierten Abschnitten besteht, die regelmässig auf einem Durchmesser verteilt sind.

## Claims

1. A monophase electromagnetic actuator comprising at least a first ferromagnetic part (10) firmly attached to an element moving along a direction Y, and a second fixed statoric part (1, 2, 3) made of a soft magnetic material and comprising at least an electric coil (15), said actuator comprising a transversely magnetized thin magnet (16), the fixed statoric part and the moving ferromagnetic part (10, 40, 41) defining between them at least two air gaps (13, 14) symmetrically disposed with respect to the center plane normal to the moving element (10, 40, 41) shifting axis Y and extending through the middle of the permanent magnet (16), the length of the moving ferromagnetic part (10, 40, 41) being approximately equal to the length of the permanent magnet (16), characterized in that the permanent magnet (16) is constituted of a thin tubular piece coaxial to a single electric coil (15).

2. A monophase electromagnetic actuator according to claim 1, characterized in that the air gaps (13, 14) forms with the axis Y an angle between 0 and 90 degrees, preferably around 45 degrees.

3. A monophase electromagnetic actuator according to claim 1 or 2, characterized in that the fixed statoric part is constituted of two cylindrical pieces joined together by a tubular closing piece (3) made of a soft magnetic material, having an annular front part extended by a central part having a conical surface, the moving ferromagnetic part (10, 40, 41) being constituted of a tubular piece made of a soft ferromagnetic material, having at its front ends, a conical surface complementary of the fixed statoric pieces conical surface, the magnet (16) being constituted of a radially magnetized tubular piece.

4. A monophase electromagnetic actuator according to claim 3, characterized in that the coil (15) is housed in a cylindrical cavity provided in the fixed statoric part.

5. A monophase electromagnetic actuator according to claim 3 or 4, characterized in that the coil (15) is constituted of two annular coils symmetrically disposed with respect to the center transverse plane (27), housed in cylindrical cavities provided in the fixed statoric part.

6. A monophase electromagnetic actuator according to any one of the preceding claims, characterized in that it comprises two springs exerting a restoring force directed along the axis Y, on each of the moving element ends (10).

7. A monophase electromagnetic actuator according to claim 1, characterized in that it comprises a second moving ferromagnetic part (10, 41) coaxial to the first moving ferromagnetic part (40) and located between the permanent magnet (16) and the insulating piece (17), the electrical coil (15) causing the two moving statoric parts to shift in opposite directions.

8. A monophase electromagnetic actuator according to any one of the preceding claims, characterized in that the magnet (16) is fixed.

9. A monophase electromagnetic actuator according to any one of claims 1 to 3, characterized in that the magnet (16) is constituted of three magnets (51 to 53) of tile shape forming sectors of approximately 120°.

10. A monophase electromagnetic actuator according tQ any one of claims 1 to 3, characterized in that the magnet (16) is constituted of a series of magnetized sectors evenly distributed along a diameter.
